# EUROPEAN PATENT APPLICATION

(11) **EP 4 715 080 A1**
(43) Date of publication of application: **25.03.2026**
(21) Application number: 24842417.8
(22) Date of filing: 18.07.2024
(51) Int. Cl.: C22C 38/02, C22C 38/04, C22C 38/60, C21D 8/12

(54) **NON-ORIENTED ELECTRICAL STEEL SHEET WITH EXCELLENT FATIGUE PERFORMANCE AND MANUFACTURING METHOD THEREFOR**

(30) Priority: 18.07.2023 CN 202310881256
(71) Applicant: BAOSHAN IRON & STEEL CO., LTD., Shanghai 201900 (CN)
(72) Inventor: FANG, Xianshi, Shanghai 201900 (CN); ZHANG, Feng, Shanghai 201900 (CN); WANG, Bo, Shanghai 201900 (CN); WANG, Zhicheng, Shanghai 201900 (CN)
(74) Representative: Maiwald GmbH
(86) International application number: PCT/CN2024/106144
(87) International publication number: WO 2025/016429

(57) **Abstract**

The present disclosure relates to a non-oriented electrical steel sheet with excellent fatigue performance. In addition to Fe and inevitable impurities, the non-oriented electrical steel sheet further comprises the following chemical elements in mass percentage: 0 < C ≤ 0.0025%, Si: 3.10-3.80%, Mn: 0.14-0.95%, Al: 0.25-1.05%, Ca: 0.0003-0.01%. The number of MgO·Al₂O₃ spinel-type inclusions with a size of 1.5 µm or more in the non-oriented electrical steel sheet is not more than 7 counts/mm². The non-oriented electrical steel sheet has excellent fatigue performance, enabling the drive motor of a new-energy vehicle to undergo repeated startups and stable operation under complex operating conditions without deformation or fracture. Moreover, when the non-oriented electrical steel sheet is used as a stator material, it exhibits the characteristic of low iron loss at high frequencies after stress relief annealing.

## Description

### TECHNICAL FIELD

The present disclosure relates to a steel sheet and a manufacturing method therefor, in particular to a non-oriented electrical steel sheet and a manufacturing method therefor.

### BACKGROUND

In recent years, with the increasing global demand for energy conservation, environmental protection, and low-carbon emissions, traditional fuel vehicles are gradually being replaced by new energy electric vehicles. The drive motor, as a core component of electric vehicles, requires high efficiency, lightweight, high speed, and high reliability.

Non-oriented electrical steel sheet is an excellent soft magnetic material widely used in various motor cores. In order to adapt to high speed and high stability, there is an increasing demand for the fatigue strength of rotors. From the perspective of motor design, in order to improve motor efficiency and reduce magnetic leakage, the width of magnetic isolation bridges is designed to be thinner and thinner. This, in turn, requires the materials to possess high strength to ensure that the rotor has sufficient stability and safety during repeated operation, without abnormal operating conditions such as deformation, fracture, and sudden shutdown. From the perspective of high-power motors, it is required that the non-oriented silicon steel used as the stator core material has low iron loss at high frequencies to reduce energy consumption.

However, there is currently no mature technical solution in the prior art that can address the above technical problems.

In view of this, there is a need to provide a non-oriented electrical steel sheet with excellent fatigue performance and manufacturing method therefor.

### SUMMARY

One of the objectives of the present disclosure is to provide a non-oriented electrical steel sheet. The non-oriented electrical steel sheet has excellent fatigue performance, enabling the drive motor of a new-energy vehicle to undergo repeated startups and stable operation under complex operating conditions without deformation or fracture. Moreover, when the non-oriented electrical steel sheet is used as a stator material, it exhibits the characteristic of low iron loss at high frequencies after stress relief annealing.

In order to achieve the above objective, the present disclosure provides a non-oriented electrical steel sheet, wherein in addition to Fe and inevitable impurities, the non-oriented electrical steel sheet further comprises the following chemical elements in mass percentage: C≤0.0025%, Si: 3.10-3.80%, Mn: 0.14-0.95%, Al: 0.25-1.05%, Ca: 0.0003-0.01%;
wherein the number of MgO·Al₂O₃ spinel-type inclusions with a size of 1.5 µm or more in the non-oriented electrical steel sheet is not more than 7 counts/mm².

Preferably, in the non-oriented electrical steel sheet according to the present disclosure, the number of MgO·Al₂O₃ spinel-type inclusions with a size of 1.5 µm or more is not more than 5 counts/mm².

More preferably, in the non-oriented electrical steel sheet according to the present disclosure, the number of MgO·Al₂O₃ spinel-type inclusions with a size of 1.5 µm or more is not more than 3 counts/mm².

Preferably, the non-oriented electrical steel sheet according to the present disclosure comprises the following chemical elements in mass percentage:
C≤0.0025%, Si: 3.10-3.80%, Mn: 0.14-0.95%, Al: 0.25-1.05%, Ca: 0.0003-0.01%; the balance being Fe and inevitable impurities.

Preferably, the non-oriented electrical steel sheet according to the present disclosure further comprises Ge, Bi and/or REM, wherein in mass percentage, 0 < Ge ≤ 0.02%, 0 < Bi ≤ 0.01%, and/or REM: 0.0004-0.015%.

Preferably, the non-oriented electrical steel sheet according to the present disclosure further comprises Sn and/or Sb in a total amount of 0.0055-0.15% by mass.

Preferably, the non-oriented electrical steel sheet according to the present disclosure further comprises at least one of Ni, Co, Zr, Nb, Cu and Cr in a total amount of 0.01-2.5% by mass.

Preferably, in the non-oriented electrical steel sheet according to the present disclosure, the inevitable impurities include P, S, N, Ti and O, wherein in mass percentage, P≤0.025%, S≤0.0025%, N≤0.0035%, Ti≤0.002%, O≤0.002%.

Preferably, the non-oriented electrical steel sheet according to the present disclosure has a fatigue strength at 25 °C of ≥ 455 MPa before stress relief annealing.

When the non-oriented electrical steel sheet according to the present disclosure has a fatigue strength of not less than 455 MPa at room temperature (25 °C) under 1×10⁷ repeated loading cycles, the non-oriented silicon steel with high fatigue strength can meet the performance requirements of the rotor of drive motor under complex operating conditions, including repeated start/stop cycles and high rotational speeds. In particular, in the rotor magnetic isolation bridges of permanent magnet motors, in order to reduce magnetic leakage, the width of the magnetic bridges is designed to be thinner and thinner. In such cases, using non-oriented silicon steel with sufficiently high fatigue strength as the rotor ensures that the rotor does not deform or break under the centrifugal forces generated during high-speed rotation, thereby enabling stable and efficient operation.

Preferably, in the non-oriented electrical steel sheet according to the present disclosure, more than 95% of grains have a grain size of 115 µm or greater after stress relief annealing.

Preferably, the non-oriented electrical steel sheet according to the present disclosure has an iron loss P_{1.0/400} of ≤ 12.5 W/kg after stress relief annealing.

The present disclosure further provides a method for manufacturing the non-oriented electrical steel sheet, comprising the following steps: smelting, RH refining, casting, hot rolling, normalizing annealing, cold rolling, continuous annealing and applying insulation coating, wherein in the RH refining step: the incoming refining slag contains MgO ≤ 5 wt%; Ca is added to modify inclusions in molten steel to gradually transform MgO·Al₂O₃ spinel-type inclusions into CaO·MgO·Al₂O₃ composite inclusions; and a circulating gas flow rate V satisfies: 140 ≤ V ≤ 245-1.6×T×[Al]², where [Al] represents the Al content in the molten steel (substituted with the numerical value preceding the % symbol of the mass percentage of element Al in the molten steel), and T represents aluminum deoxidation time in minutes during RH refining (substituted with the numerical value preceding the unit symbol *min*)*.*

In the method according to the present disclosure, the heating temperature and finishing rolling temperature in the hot rolling step are not particularly limited, and may be temperatures commonly used in the field. In one embodiment, the heating temperature of the slab is 1150 °C, and the finishing rolling temperature of the steel coil is 800 °C. In one embodiment, the coiling temperature is 625 °C. In one embodiment, the thickness of the hot-rolled plate is 2.0-2.5 mm.

In the method according to the present disclosure, the holding temperature and holding time in the normalizing annealing step are not particularly limited, and may be temperatures and durations commonly used in the field. In one embodiment, the holding temperature for annealing is 900 °C and the holding time is 5 minutes.

In the method according to the present disclosure, cold rolling can be carried out by either a single cold rolling process or a double cold rolling process.

Preferably, in the method according to the present disclosure, the holding temperature is 720-850 °C and the holding time is 10-75 s in the continuous annealing step. Under the above process conditions for continuous annealing, high tensile strength and fatigue performance can be achieved through fine grain strengthening, while also ensuring the low iron loss at high frequencies of the non-oriented silicon steel.

Preferably, the method according to the present disclosure further comprises a stress relief annealing step after the steps of continuous annealing and applying insulation coating. In the stress relief annealing step, the annealing temperature is 745-855 °C and the holding time is 60-180 min.

The non-oriented electrical steel sheet manufactured by the method according to the present disclosure has excellent fatigue performance, enabling the drive motor of a new-energy vehicle to undergo repeated startups and stable operation under complex operating conditions without deformation or fracture. Moreover, the non-oriented electrical steel sheet further exhibits the characteristics of low iron loss at high frequencies after stress relief annealing, making it suitable for use as a stator material.

### DETAILED DESCRIPTION

Unless otherwise defined, all technical and scientific terms used herein have the same meanings as those commonly understood by those skilled in the art to which the present disclosure relates.

As used herein, the term "and/or" refers to and encompasses any and all possible combinations of one or more of the listed items.

Herein, the number of MgO·Al₂O₃ spinel-type inclusions is statistically analyzed by a field emission scanning electron microscopy. Photographing and observation are conducted under the backscattered electron mode, with 20 or more consecutive view fields captured. The number of MgO·Al₂O₃ oxides with a size of 1.5 µm or more in the view fields is counted and expressed as the distribution density in units of "counts/mm²".

Herein, the fatigue strength is determined according to ISO 1099-2006 *"Metallic materials - Fatigue testing - Axial force-controlled method",* with a test ambient temperature of 25±5 °C.

Herein, the grain size distribution is determined statistically in accordance with the Chinese national standard GB/T 36165-2018 *"Determination of average grain size of metal - Electron backscatter diffraction (EBSD) method".*

Herein, the iron loss P_{1.0/400} (the iron loss value when excited with a magnetic flux density of 1.0 T and a frequency of 400Hz) is determined using the square ring method in accordance with the standard GB/T10129-2019 *"Methods of measurement of magnetic properties of electrical steel strip and sheet at medium frequencies".*

The design principles of each chemical element in the non-oriented electrical steel sheet according to the present disclosure are as follows:
C: In the non-oriented electrical steel sheet according to the present disclosure, carbon is a detrimental element that leads to the formation of excessive carbides, leading to the deterioration of iron loss performance. However, since C is an inevitable element in steel, its content cannot be zero. In the present disclosure, it is desirable to control its upper limit, and to keep its content as low as possible. Therefore, in the non-oriented electrical steel sheet according to the present disclosure, the content of C is controlled to not more than 0.0025% by mass.

Si: In the non-oriented electrical steel sheet according to the present disclosure, Si is a main alloying element in electrical steel. It can increase the electrical resistivity of the steel sheet and reduce material iron loss. Meanwhile, silicon solid solution in the matrix improves the strength and fatigue limit of the steel sheet. When the Si content is less than 3.1%, the effect on improving the strength of steel sheet is limited, and the fatigue strength of the material cannot be guaranteed to be 455 MPa or more. When the Si content exceeds 3.8%, the steel sheet will become brittle, making it difficult to process. Therefore, in the non-oriented electrical steel sheet according to the present disclosure, the content of Si is controlled to 3.10-3.80%, preferably 3.32-3.80% by mass.

Mn: In the non-oriented electrical steel sheet according to the present disclosure, Mn can increase the electrical resistivity of the material, thereby reducing iron loss. Meanwhile, Mn combines with residual S in the steel to form MnS, improving the morphology of precipitates in steel. However, when the amount of Mn added exceeds 0.95%, the effect of reducing iron loss is limited and the magnetic induction deteriorates. Therefore, in the non-oriented electrical steel sheet according to the present disclosure, the content of Mn is controlled to 0.14-0.95%, preferably 0.25-0.62% by mass.

Al: In the non-oriented electrical steel sheet according to the present disclosure, Al increases electrical resistivity of the material and reduce iron loss. In order to achieve the effect of reducing iron loss, the amount of Al added generally needs to be 0.25% or more. However, when the amount of Al added is too high, it increases MgO·Al₂O₃ inclusions in the steel, which deteriorates the electromagnetic and fatigue properties of the product, and also increases surface quality defects of steel during the manufacturing process. Therefore, in the non-oriented electrical steel sheet according to the present disclosure, the content of Al is controlled to 0.25-1.05%, preferably 0.35-0.90% by mass.

Ca: In the non-oriented electrical steel sheet according to the present disclosure, the addition of calcium alloy during RH refining can improve the properties and distribution of inclusions (especially MgO·Al₂O₃ spinel-type inclusions) in the molten steel, gradually transforming them into CaO·MgO·Al₂O₃ composite inclusions with a low melting point, which is beneficial for the removal of inclusions. However, the amount of Ca added should not be too high, otherwise a large amount of CaO, Al₂O₃, SiO₂ inclusions will be formed, leading to the deterioration in magnetic properties. Therefore, in the non-oriented electrical steel sheet according to the present disclosure, the content of Ca is controlled to 0.0003-0.01%, preferably 0.0005-0.01% by mass.

For the non-oriented electrical steel sheet according to the present disclosure, MgO·Al₂O₃ spinel-type inclusions are hard and have a high melting point, making them extremely detrimental to the fatigue performance of the steel sheet, particularly large particles with a size of 1.5 µm or more. Under repeated alternating loads, stress concentration and strain concentration occur around large particle inclusions, becoming one of the important crack sources of fatigue fracture. The present inventors have found that when the number of MgO·Al₂O₃ spinel-type inclusions with a size of 1.5 µm or more in the non-oriented electrical steel sheet is not more than 7 counts/mm², the non-oriented electrical steel sheet can exhibit excellent fatigue performance.

In order to further improve the performance of the non-oriented electrical steel sheet according to the present disclosure, appropriate amounts of Ge, Bi and rare earth metals (REM) may be preferably added to the steel.

Ge: In the non-oriented electrical steel sheet according to the present disclosure, Ge can increase the electrical resistivity of the material, improve the texture of the annealed sheet, reduce iron loss, and suppress oxidation of the material during annealing. However, from the viewpoint of cost, the amount of Ge added should not exceed 0.02%. Therefore, in the non-oriented electrical steel sheet according to the present disclosure, the content of Ge may be controlled to 0 < Ge ≤ 0.02% by mass.

Bi: In the non-oriented electrical steel sheet according to the present disclosure, the addition of an appropriate amount of Bi can improve the texture of the steel sheet and enhance magnetic induction. However, when the Bi content is too high, it can lead to severe grain boundary segregation and refine the grain microstructure. Therefore, in the non-oriented electrical steel sheet according to the present disclosure, the content of Bi may be controlled to 0 < Bi ≤ 0.01% by mass.

REM: In the non-oriented electrical steel sheet according to the present disclosure, rare earth elements are prone to combine with detrimental elements such as sulfur and oxygen. The addition of an appropriate amount of rare earth elements can purify molten steel, promote the growth of small inclusions, and improve the recrystallized grain microstructure of the finished steel sheet. However, when the REM content is too high, it will lead to surface quality defects of the steel sheet. Therefore, in the non-oriented electrical steel sheet according to the present disclosure, the content of REM is controlled to 0.0004-0.015% by mass. In some preferred embodiments, the content of REM may be controlled to 0.0006-0.01% by mass.

In order to further improve the performance of the non-oriented electrical steel sheet according to the present disclosure, the steel may further comprise Sn and/or Sb.

Sn and Sb are grain boundary segregating elements that can suppress internal oxidation in steel sheets and facilitate the favorable texture of final annealed products. However, adding excessive amounts of Sn or Sb may lead to an increase in surface defects of steel. Therefore, in the non-oriented electrical steel sheet according to the present disclosure, the total amount of Sn and Sb may be controlled to 0.0055-0.15%.

In order to further improve the performance of the non-oriented electrical steel sheet according to the present disclosure, the steel may further comprise at least one of Ni, Co, Zr, Nb, Cu and Cr, and the total amount of these elements is controlled to 0.01-2.5% by mass. In the non-oriented electrical steel sheet according to the present disclosure, Ni, Co, Zr, Nb, Cu and Cr can increase the electrical resistivity of steel sheet, reduce losses, and enhance material strength. One or more of these elements may be added, and their total amount may be controlled to 0.01-2.5%.

In the non-oriented electrical steel sheet according to the present disclosure, P, S, N, Ti and O are all impurity elements in the non-oriented electrical steel sheet. Within the limits permitted by technical conditions, in order to obtain a steel with superior performance and higher quality, the contents of impurity elements in the steel should be reduced as much as possible.

P: In the non-oriented electrical steel sheet according to the present disclosure, P tends to segregation at grain boundaries, increasing material brittleness. Therefore, in the non-oriented electrical steel sheet according to the present disclosure, the content of P may be controlled to 0.025% or less. In some preferred embodiments, the content of P may be controlled to 0.02% or less.

S: In the non-oriented electrical steel sheet according to the present disclosure, S is a detrimental impurity element. When the residual content of S is too high, it will form a large amount of sulfide precipitates, which hinder grain growth, and lead to the deterioration of iron loss performance of the steel sheet. Therefore, in the non-oriented electrical steel sheet according to the present disclosure, the content of S element may be controlled to 0.0025% or less by mass.

N: In the non-oriented electrical steel sheet according to the present disclosure, N is a detrimental impurity element that combines with various elements in the steel to form a large number of fine nitrides, which deteriorate magnetic properties. Therefore, in the non-oriented electrical steel sheet according to the present disclosure, the content of N element may be controlled to 0.0035% or less by mass. In some preferred embodiments, the content of N element may be controlled to 0.0030% or less by mass.

Ti: In the non-oriented electrical steel sheet according to the present disclosure, Ti is a detrimental impurity element for non-oriented silicon steel. Ti reacts with carbon and nitrogen to form titanium carbide and titanium nitride precipitates, which pin grain boundaries and inhibit grain growth during recrystallization, thereby deteriorating iron loss performance. Therefore, in the non-oriented electrical steel sheet according to the present disclosure, the content of Ti element may be controlled to 0.002% or less by mass. In some preferred embodiments, the content of Ti element may be controlled to 0.0015% or less by mass.

O: In the non-oriented electrical steel sheet according to the present disclosure, oxygen is a detrimental impurity element that needs to be strictly controlled in the steelmaking process. Otherwise, a large number of oxide inclusions will form, degrading the electromagnetic performance. Therefore, in the non-oriented electrical steel sheet according to the present disclosure, the content of O may be controlled to 0.002% or less by mass.

In one preferred embodiment, after stress relief annealing, more than 95% of grains in the non-oriented electrical steel sheet according to the present disclosure have a grain size of 115 µm or greater, and the steel sheet has an iron loss P_{1.0/400} of ≤ 12.5 W/kg. The non-oriented electrical steel sheet has the characteristics of low iron loss at high frequencies, and is suitable for use as a stator material.

The present disclosure further provides a method for manufacturing the non-oriented electrical steel sheet, comprising the following steps: smelting, RH refining, casting, hot rolling, normalizing annealing, cold rolling, continuous annealing and applying insulation coating, wherein in the RH refining step: the incoming refining slag contains MgO ≤ 5 wt%; Ca is added to modify inclusions in molten steel to gradually transform MgO·Al₂O₃ spinel-type inclusions into CaO·MgO·Al₂O₃ composite inclusions; and a circulating gas flow rate V satisfies: 140 ≤ V ≤ 245-1.6×T×[Al]², where [Al] represents the Al content in the molten steel (substituted with the numerical value preceding the % symbol of the mass percentage of element Al in the molten steel), and T represents aluminum deoxidation time in minutes during RH refining (substituted with the numerical value preceding the unit symbol *min).*

In the process of manufacturing non-oriented silicon steel, refining slag needs to be added during RH refining. Meanwhile, in order to reduce the loss of the ladle lining, the slag comprises a certain amount of MgO. For non-oriented silicon steel containing Al, during aluminum deoxidation and aluminum alloying treatment, the molten steel circulates and part of the refining slag is drawn into the molten steel. At this time, MgO in the steel slag reacts with acid soluble aluminum and Al₂O₃ inclusions in the molten steel, generating detrimental inclusions such as MgO·Al₂O₃ spinel-type inclusions.

However, as mentioned above, MgO·Al₂O₃ spinel-type inclusions are hard and have a high melting point, making them extremely detrimental to the fatigue performance of the steel sheet, particularly large particles with a size of 1.5 µm or more. Under repeated alternating loads, stress concentration and strain concentration occur around large particle inclusions, becoming one of the important crack sources of fatigue fracture. Therefore, in order to obtain non-oriented silicon steel with excellent fatigue performance, the present disclosure not only adopts specific chemical composition design, but also controls the detrimental inclusions of large-sized MgO·Al₂O₃ in the steel through specific processes.

In the manufacturing method according to the present disclosure, the MgO content in the incoming refining slag during the RH refining step is controlled to not more than 5 wt%, such that the Mg content can be reduced from source, thereby reducing the reaction between MgO and acid soluble aluminum in the molten steel.

In addition, in the manufacturing method according to the present disclosure, calcium is added during the refining process to mortify the inclusions in molten steel, gradually transforming the MgO·Al₂O₃ spinel-type inclusions into CaO·MgO·Al₂O₃ composite inclusions with a low melting point, which are prone to flow with the molten steel, and can be adsorbed and removed by the top slag.

In addition, in the manufacturing method according to the present disclosure, an appropriate circulating gas flow rate V (with a unit of Nm³/h) is employed during the refining process. The circulating gas flow rate should not be too low, otherwise the flow of molten steel is insufficient, the steel slag reaction is incomplete, and the efficiency of inclusions removal is low. The circulating gas flow rate should not be too high, especially for non-oriented silicon steel containing Al. Excessive gas flow rate can cause serious slag rolling and is not conducive to the aggregation, growth, floating up and removal of MgO·Al₂O₃ inclusions. The range of the circulating gas flow rate V used in the method of the present disclosure is closely related to the Al content and aluminum deoxidation treatment time, satisfying: 140 ≤ V ≤ 245-1.6×T×[Al]², where [Al] represents the total aluminum content in the molten steel (in wt.%), and T represents the aluminum deoxidation time in the RH refining process (in minutes).

Through the above technical means, the number of MgO·Al₂O₃ spinel-type inclusions with a size of 1.5 µm or more in the non-oriented electrical steel sheet product can be reduced to no more than 7 counts/mm².

The non-oriented electrical steel sheet and manufacturing method therefor according to the present disclosure have the following advantages and beneficial effects:
The non-oriented electrical steel sheet according to the present disclosure exhibits excellent fatigue performance. In some embodiments, it has a fatigue strength of not less than 455 MPa at room temperature under 1×10⁷ repeated loading cycles. The non-oriented electrical steel sheet according to the present disclosure has sufficiently high fatigue strength to ensure that the rotor does not deform or fracture under the centrifugal force generated by high-speed rotation, allowing stable and efficient operation of the rotor and ensuring that the drive motor of a new-energy vehicle can undergo repeated startups and stable operation under complex operating conditions without deformation or fracture.

The non-oriented electrical steel sheet according to the present disclosure, when used as a stator material, has the characteristic of low iron loss at high frequencies after stress relief annealing. In some embodiments, more than 95% of grains in the stress-relief annealed steel sheet have a size of 115 µm or greater, indicating fully grown grains, resulting in a significant reduction in iron loss P_{1.0/400} (P_{1.0/400} ≤ 12.5 W/kg).

The following will provide further explanation and illustration of the non-oriented electrical steel sheet according to the present disclosure and manufacturing method therefor through specific embodiments. However, this explanation and illustration shall not be construed as unduly limiting the technical solution of the present disclosure.

### Examples 1-10 and Comparative Examples 1-5

The non-oriented electrical steel sheets of Examples 1-10 and Comparative Examples 1-5 were prepared through the following steps:
(1) Blast furnace molten iron was subjected to molten iron pretreatment and converter smelting.
(2) Decarbonization, deoxidation and alloying treatment were carried out via RH refining. In the RH refining step: MgO content in the incoming refining slag was controlled to ≤ 5wt%; Ca was added to modify inclusions in molten steel to gradually transform MgO·Al₂O₃ spinel-type inclusions into CaO·MgO·Al₂O₃ composite inclusions; and the circulating gas flow rate V was controlled to satisfy: 140 ≤ V ≤ 245-1.6×T×[Al]², where [Al] represents the total aluminum content in the molten steel (in wt%), and T represents the aluminum deoxidation time during RH refining (in minutes). The MgO content of the refining slag, circulating gas flow rate V, and aluminum deoxidation time T for each Example and Comparative Example are shown in Table 2.
(3) After refining, the molten steel was continuously cast to obtain a cast slab. The chemical compositions of the cast slabs in Examples and Comparative Examples are shown in Tables 1-1 and 1-2.
(4) Hot rolling: The heating temperature of the slab was 1150 °C, the finishing rolling temperature of the steel coil was 800 °C, and the coiling temperature was 625 °C, to obtain hot-rolled plates with a thickness specification of 2.0-2.5 mm.
(5) Normalizing annealing: for normalizing annealing, the holding temperature was 900 °C and the holding time was 5 minutes.
(6) The steel plates were cold rolled to a thickness of 0.25-0.30 mm for finished products. The steel coils of Examples 3 and 4 were subjected to double cold rolling process, while other Examples and Comparative Examples were subjected to single cold rolling process.
(7) Continuous annealing and applying insulation coating: For continuous annealing, the holding temperature was 720-850 °C, and the holding time was 10-75 s. The holding temperatures and holding times for Examples and Comparative Examples are listed in Table 2.
(8) Stress relief annealing: The annealing temperature was 745-855 °C, and the holding time was 60-180 minutes. The annealing temperatures and holding times for Examples and Comparative Examples are listed in Table 2.

Tables 1-1 and 1-2 list the mass percentages of chemical elements in the non-oriented electrical steel sheets of Examples 1-10 and the comparative steel sheets of Comparative Examples 1-5.

**Table 1-1 (wt%, the balance being Fe and other inevitable impurities)**

| No. | C | Si | Mn | Al | Ca |
|---|---|---|---|---|---|
| Example 1 | 0.0018 | 3.80 | 0.25 | 0.25 | 0.0003 |
| Example 2 | 0.0015 | 3.65 | 0.14 | 0.90 | 0.01 |
| Example 3 | 0.0014 | 3.44 | 0.45 | 1.05 | 0.004 |
| Example 4 | 0.0024 | 3.51 | 0.95 | 0.64 | 0.0008 |
| Example 5 | 0.0013 | 3.32 | 0.55 | 1.04 | 0.0005 |
| Example 6 | 0.0015 | 3.41 | 0.85 | 0.35 | 0.0004 |
| Example 7 | 0.0018 | 3.10 | 0.62 | 0.85 | 0.0006 |
| Example 8 | 0.0016 | 3.25 | 0.35 | 0.85 | 0.0006 |
| Example 9 | 0.0015 | 3.35 | 0.80 | 1.04 | 0.0008 |
| Example 10 | 0.0010 | 3.48 | 0.25 | 0.75 | 0.0008 |
| Comparative Example 1 | 0.0022 | 3.65 | 0.55 | 0.52 | 0.0003 |
| Comparative Example 2 | 0.0012 | 3.42 | 0.25 | 0.95 | 0.0005 |
| Comparative Example 3 | 0.0020 | ***2.20*** | ***0.12*** | 0.55 | 0.0003 |
| Comparative Example 4 | ***0.0037*** | ***2.45*** | 0.55 | 1.00 | 0.0003 |
| Comparative Example 5 | 0.0021 | 3.21 | ***0.12*** | ***0.015*** | ***0.0001*** |

**Table 1-2 (wt%, the balance being Fe and other inevitable impurities)**

| No. | Ge | Bi | REM | Sn+Sb | P | S | N | Ti | O | Other elements |
|---|---|---|---|---|---|---|---|---|---|---|
| Example 1 | / | / | / | / | 0.016 | 0.001 | 0.0015 | 0.0005 | 0.001 | / |
| Example 2 | 0.02 | 0.01 | / | / | 0.018 | 0.0007 | 0.0013 | 0.001 | 0.0008 | / |
| Example 3 | 0.001 | 0.0002 | / | 0.05 | 0.009 | 0.0018 | 0.0009 | 0.0012 | 0.0015 | / |
| Example 4 | / | 0.0045 | 0.015 | 0.0055 | 0.015 | 0.0008 | 0.0016 | 0.0015 | 0.0012 | / |
| Example 5 | 0.0012 | 0.0001 | / | / | 0.012 | 0.0011 | 0.0012 | 0.0005 | 0.0012 | Ni: 0.01 |
| Example 6 | 0.0003 | / | 0.0004 | / | 0.021 | 0.0006 | 0.0011 | 0.0005 | 0.001 | Cr: 1.7 |
| Example 7 | 0.0001 | / | 0.0065 | / | 0.015 | 0.002 | 0.0015 | 0.0004 | 0.0009 | Cr+Nb: 2.0 |
| Example 8 | / | / | / | 0.15 | 0.014 | 0.0015 | 0.0008 | 0.0006 | 0.0014 | Cu+Ni+Co: 2.5 |
| Example 9 | 0.0035 | 0.0075 | / | / | 0.015 | 0.0003 | 0.0017 | 0.0007 | 0.0007 | Co+Zr+Nb+Cu: 1.85 |
| Example 10 | 0.005 | 0.0002 | / | / | 0.009 | 0.0005 | 0.0024 | 0.0011 | 0.0013 | Ni+Co+Zr+Nb+Cu+Cr: 0.95 |
| Comparative Example 1 | 0.0001 | 0.0001 | / | / | 0.023 | 0.0008 | 0.0014 | 0.0008 | 0.0015 | / |
| Comparative Example 2 | 0.0002 | / | / | / | 0.015 | 0.0012 | 0.0015 | 0.0012 | 0.0012 | / |
| Comparative Example 3 | / | / | / | / | 0.020 | 0.0008 | 0.0013 | 0.001 | 0.0018 | / |
| Comparative Example 4 | 0.0001 | / | / | / | 0.021 | 0.0005 | 0.0023 | 0.0015 | 0.0017 | / |
| Comparative Example 5 | / | / | / | / | 0.0015 | 0.0012 | 0.0024 | 0.0015 | 0.0017 | / |

Table 2 lists the specific process parameters in each step of the method for manufacturing the non-oriented electrical steel sheets of Examples 1-10 and the comparative steel sheets of Comparative Examples 1-5.

**Table 2**

| No. | MgO content in refining slag (%) | Circulating gas flow rate V (Nm³/h) | Aluminum deoxidation time T (min) | Continuous annealing | | Stress relief annealing | |
|---|---|---|---|---|---|---|---|
| | | | | Holding temperature (^{1,}C) | Holding time (s) | Annealing temperature (^{1,}C) | Holding time (min) |
| Example 1 | 5.0 | 230 | 10 | 850 | 10 | 745 | 180 |
| Example 2 | 5.0 | 200 | 10 | 850 | 30 | 825 | 120 |
| Example 3 | 5.0 | 200 | 10 | 820 | 30 | 825 | 120 |
| Example 4 | 5.0 | 180 | 15 | 820 | 25 | 825 | 120 |
| Example 5 | 5.0 | 180 | 15 | 800 | 25 | 825 | 120 |
| Example 6 | 4.5 | 180 | 15 | 800 | 20 | 855 | 60 |
| Example 7 | 4.5 | 180 | 15 | 720 | 75 | 855 | 60 |
| Example 8 | 4.5 | 160 | 25 | 750 | 45 | 745 | 150 |
| Example 9 | 4.0 | 160 | 25 | 750 | 50 | 745 | 120 |
| Example 10 | 4.0 | 160 | 25 | 800 | 35 | 855 | 180 |
| Comparative Example 1 | ***10*** | 200 | 15 | 830 | 25 | 800 | 120 |
| Comparative Example 2 | 5 | ***110*** | 15 | 830 | 20 | 800 | 180 |
| Comparative Example 3 | 5 | 160 | 15 | 800 | 75 | ***860*** | 120 |
| Comparative Example 4 | 5 | 200 | 15 | 800 | 50 | 700 | 120 |
| Comparative Example 5 | 5 | 200 | 15 | 800 | 45 | 800 | 120 |

Next, samples were taken from the non-oriented electrical steel sheets of Examples 1-10 and the comparative steel sheets of Comparative Examples 1-5, and these non-oriented electrical steel sheet samples were tested. The obtained test results are listed in Table 3 below. The relevant performance testing methods are as follows:
Fatigue performance: Testing was conducted according to ISO 1099-2006 *"Metallic materials - Fatigue testing - Axial force-controlled method".* A servohydraulic fatigue testing machine with a maximum capacity of 10 kN was used. The test parameters were set as follows: test ambient temperature of 25±5 °C; sinusoidal waveform control; stress ratio R=0.1; frequency of 20-30 Hz; and a maximum number of cycles of 1.0×10⁷.

Number of MgO·Al₂O₃ inclusions: Statistical analysis was performed using a field emission scanning electron microscopy. A 20×20 mm sample was randomly cut from the base steel sheet, ground to the 1/2 thickness position of the sheet, and subjected to mechanical polishing or electrochemical polishing. Photographing and observation were then carried out under backscattered electron mode to identify Al₂O₃ oxide inclusions and count their number. 20 or more consecutive fields of view were captured, the number of MgO·Al₂O₃ oxide inclusions with a size ≥ 1.5 µm was counted, and the distribution density was calculated in units of "counts/mm²".

Grain size: The grain size distribution was determined statistically according to the Chinese national standard GB/T 36165-2018 *"Determination of average grain size of metal - Electron backscatter diffraction (EBSD) method".* A 20 × 20 mm sample was randomly cut from the stress-relief annealed sheet. The sample was then ground down to the 1/2 thickness position of the steel sheet and subjected to mechanical or electrochemical polishing. The observation field contained at least 500 grains, based on which the grain size distribution was statistically analyzed to calculate the proportion of grains with a size of 115 µm or more.

Iron loss P_{1.0/400} (iron loss value when excited at a magnetic flux density of 1.0 T and a frequency of 400 Hz): Testing was conducted using the square ring method according to the standard GB/T10129-2019 *"Methods of measurement of magnetic properties of electrical steel strip and sheet at medium frequencies".*

**Table 3**

| No. | Steel sheet thickness (mm) | Number of MgO·Al₂O₃ inclusions with a size of 1.5 µm or more (counts/mm²) | Proportion of grains with a size of 115 µm or more after stress relief annealing (%) | Fatigue strength at room temperature 25 °C (MPa) | Iron loss P_{1.0/400} after stress relief annealing (W/kg) |
|---|---|---|---|---|---|
| Example 1 | 0.25 | 1 | 96% | 615 | 10.43 |
| Example 2 | 0.25 | 2 | 97% | 574 | 11.31 |
| Example 3 | 0.25 | 1 | 98% | 510 | 10.8 |
| Example 4 | 0.25 | 1 | 98% | 505 | 10.21 |
| Example 5 | 0.25 | 2 | 97% | 465 | 11.54 |
| Example 6 | 0.30 | 1.0 | 97% | 495 | 11.45 |
| Example 7 | 0.30 | 0 | 97% | 556 | 11.61 |
| Example 8 | 0.30 | 0.5 | 96% | 535 | 12.12 |
| Example 9 | 0.30 | 1 | 95% | 514 | 12.4 |
| Example 10 | 0.30 | 3 | 98% | 475 | 10.11 |
| Comparative Example 1 | 0.25 | ***8*** | *96%* | ***450*** | 12.4 |
| Comparative Example 2 | 0.25 | ***15*** | *97%* | ***435*** | 11.51 |
| Comparative Example 3 | 0.30 | 2 | *97%* | ***286*** | ***19.21*** |
| Comparative Example 4 | 0.30 | 1 | ***94%*** | ***295*** | ***18.45*** |
| Comparative Example 5 | 0.30 | 1 | *96%* | ***324*** | ***15.62*** |

It can be seen from Table 3 that in the non-oriented electrical steel sheets of Examples 1-10 according to the present disclosure, the number of MgO·Al₂O₃ spinel-type inclusions with a size of 1.5 µm or more does not exceed 5 counts/mm², the fatigue strength at room temperature is higher than 465 MPa, and the high-frequency iron loss P_{1.0/400} after stress relief annealing is less than 12.12 W/kg. Therefore, the non-oriented electrical steel sheets of Examples 1-10 exhibit excellent fatigue performance, enabling the drive motor of a new-energy vehicle to undergo repeated startups and stable operation under complex operating conditions without deformation or fracture, and can be used as stator materials after stress relief annealing.

In contrast, in Comparative Examples 1 and 2, the MgO content in refining slag is relatively high and the circulating gas flow rate is relatively low, resulting in a high density of MgO·Al₂O₃ oxide inclusions in the finished product, and a fatigue strength below 455 MPa under 1.0×10⁷ cycles.

In Comparative Examples 3-5, the content of Si, Al or Mn in the chemical composition of steel is relatively low, resulting in reduced final fatigue strength and increased iron loss.

All publications, patent applications, patents, and other references mentioned in the present disclosure are incorporated herein by reference in their entirety.

Although the present disclosure has been illustrated and described with reference to certain preferred embodiments, it should be understood by those skilled in the art that the foregoing description is provided in conjunction with specific embodiments to further elaborate the present disclosure, and it should not be construed as the specific embodiment of the present disclosure being limited to these explanations. Various changes in form and detail may be made by those skilled in the art, including making several simple deductions or substitutions, without departing from the spirit and scope of the present disclosure.

## Claims

1. A non-oriented electrical steel sheet, wherein in addition to Fe and inevitable impurities, the non-oriented electrical steel sheet further comprises the following chemical elements in mass percentage:
0 < C ≤ 0.0025%, Si: 3.10-3.80%, Mn: 0.14-0.95%, Al: 0.25-1.05%, Ca: 0.0003-0.01%; wherein the number of MgO·Al₂O₃ spinel-type inclusions with a size of 1.5 µm or more in the non-oriented electrical steel sheet is not more than 7 counts/mm², preferably not more than 5 counts/mm², more preferably not more than 3 counts/mm².

2. The non-oriented electrical steel sheet according to claim 1, wherein the non-oriented electrical steel sheet comprises the following chemical elements in mass percentage:
0 < C ≤ 0.0025%, Si: 3.10-3.80%, Mn: 0.14-0.95%, Al: 0.25-1.05%, Ca: 0.0003-0.01%; the balance being Fe and inevitable impurities.

3. The non-oriented electrical steel sheet according to claim 1 or 2, wherein the non-oriented electrical steel sheet further comprises Ge, Bi and/or REM, and wherein in mass percentage, 0 < Ge ≤ 0.02%, 0 < Bi ≤ 0.01%, and/or REM: 0.0004-0.015%.

4. The non-oriented electrical steel sheet according to any one of claims 1 to 3, wherein the non-oriented electrical steel sheet further comprises Sn and/or Sb in a total amount of 0.0055-0.15% by mass.

5. The non-oriented electrical steel sheet according to any one of claims 1 to 4, wherein the non-oriented electrical steel sheet further comprises at least one of Ni, Co, Zr, Nb, Cu and Cr in a total amount of 0.01-2.5% by mass.

6. The non-oriented electrical steel sheet according to any one of claims 1 to 5, wherein the inevitable impurities include P, S, N, Ti and O, and wherein in mass percentage, P≤0.025%, S≤0.0025%, N≤0.0035%, Ti≤0.002%, O≤0.002%.

7. The non-oriented electrical steel sheet according to any one of claims 1 to 6, wherein the non-oriented electrical steel sheet has a fatigue strength at 25 °C of ≥ 455 MPa before stress relief annealing.

8. The non-oriented electrical steel sheet according to any one of claims 1 to 7, wherein more than 95% of grains in the non-oriented electrical steel sheet have a size of 115 µm or greater after stress relief annealing.

9. The non-oriented electrical steel sheet according to any one of claims 1 to 8, wherein the non-oriented electrical steel sheet has an iron loss P_{1.0/400} of ≤ 12.5 W/kg after stress relief annealing.

10. A method for manufacturing the non-oriented electrical steel sheet according to any one of claims 1 to 9, comprising the following steps: smelting, RH refining, casting, hot rolling, normalizing annealing, cold rolling, continuous annealing and applying insulation coating, wherein in the RH refining step:
an incoming refining slag contains MgO ≤ 5 wt%; Ca is added to modify inclusions in molten steel to gradually transform MgO·Al₂O₃ spinel-type inclusions into CaO·MgO·Al₂O₃ composite inclusions; and a circulating gas flow rate V satisfies: 140 ≤ V ≤ 245-1.6×T×[Al]², where [Al] represents the Al content in the molten steel (substituted with the numerical value preceding the % symbol of the mass percentage of element Al in the molten steel), and T represents aluminum deoxidation time in minutes during RH refining (substituted with the numerical value preceding the unit symbol *min*)*.*

11. The method according to claim 10, wherein in the continuous annealing step, a holding temperature is 720-850 °C and a holding time is 10-75 s.

12. The method according to claim 10 or 11, further comprising a stress relief annealing step after the steps of continuous annealing and applying insulation coating, wherein in the stress relief annealing step, an annealing temperature is 745-855 °C and a holding time is 60-180 min.
